# EUROPEAN PATENT SPECIFICATION

(11) **EP 3 851 827 B1**
(45) Date of publication and mention of the grant of the patent: **01.05.2024**
(21) Application number: 20152273.7
(22) Date of filing: 16.01.2020
(51) Int. Cl.: G01N 1/20, B01D 61/12, G01N 1/40

(54) **FILTRATION MODULE AND ASSEMBLY FOR FILTERING A PROCESS MEDIUM IN A BIOPROCESS AND METHOD OF SAMPLING DURING A BIOPROCESS**
FILTRATIONSMODUL UND ANORDNUNG ZUM FILTERN EINES PROZESSMEDIUMS IN EINEM BIOPROZESS UND VERFAHREN ZUR PROBENENTNAHME WÄHREND EINES BIOPROZESSES
MODULE DE FILTRATION ET ENSEMBLE POUR FILTRER UN MILIEU DE TRAITEMENT DANS UN BIOPROCÉDÉ ET PROCÉDÉ D'ÉCHANTILLONNAGE PENDANT UN BIOPROCÉDÉ

(43) Date of publication of application: 21.07.2021
(73) Proprietor: Sartorius Stedim Biotech GmbH, 37079 Göttingen (DE)
(72) Inventor: GRIMM, Christian, 37079 Göttingen (DE)
(74) Representative: Novagraaf International SA

(56) References cited:
- EP-A1- 1 922 987
- EP-A1- 3 593 895
- WO-A1-92/17762
- DE-A1-102009 001 455
- DE-B3-102017 011 263
- US-A1- 2018 243 693

## Description

The invention relates to a filtration module for filtering a process medium in a bioprocess, in particular in a biopharmaceutical process. The invention further relates to a filtration assembly comprising such a filtration module. The invention also relates to a method of sampling during a bioprocess, in particular in a biopharmaceutical process.

Biopharmaceutical processes typically include basic process steps such as cell separation (e.g. by depth filtration), sterile filtration, chromatography (column chromatography, membrane chromatography with single-use capsules or cartridges, flow-through chromatography), virus inactivation, virus filtration, crossflow filtration etc. These process steps represent unit operations that can be interconnected in various ways to form different overall processes.

With regard to filtration processes, it is current practice to connect different filter devices or filter assemblies, which are designed to accomplish different process steps, as shown in DE 34 41 249 A1 and DE 20 2018 000 467 U1, for example.

Furthermore, a dialysis probe for measuring nutrients and metabolites in a bioreactor is known from EP 2 091 412 B1, and a probe for measuring other parameters in a bioreactor, such as the concentration of an antibody, is known from WO 2019/110185 A1.

DE 10 2009 001 455 A1 shows a micro dialysis probe for insertion into a hollow needle to sample a body fluid from a living being. The hollow needle forms a tube of circular cross-section that constitutes a sample chamber. The micro dialysis probe has an internal analyte accommodation chamber which is in fluid communication with a feed channel and a drainage channel arranged in the interior of the micro dialysis probe for transporting a transport medium into and from the analyte accommodation chamber. In the region of the analyte accommodation chamber, the outer wall of the micro dialysis probe has a window which is covered by a dialysis membrane. From the sample chamber, an analyte is able to diffuse through the dialysis membrane into the analyte accommodation chamber. A sterile filter can be mounted at the inlet of the hollow needle to prevent microorganisms from entering the interior of the hollow needle which could form unwanted deposits or biofilms.

From EP 3 593 895 A1 a conventional membrane-based device for filtering a medium in the context of food production is known. Outlet devices and sensor units for taking samples of the medium processed in the device are provided at one or more positions of the device. The samples are fed to a sensor interface, and the data determined by the sensor unit are transmitted to an external server which analyzes the data. The result of this analysis determines whether a cleaning agent or an additive should be introduced into the device in a cleaning stage after the ongoing operation has been interrupted and the device has been emptied.

WO 92/17762 A1 shows an apparatus for the continuous on-line analysis of process streams. The apparatus comprises a membrane separator with a hollow fiber membrane formed of silicone rubber through which a sample can be passed to an analyzer.

It is an object of the invention to enable on-line or even in-line measurement of certain analytes or parameters during a running process step or even during a substep of a bioprocess.

The above problem is solved by a filtration module according to claim 1. Advantageous and expedient embodiments of the invention are apparent from the dependent claims.

The invention provides a filtration module for filtering a process medium in a bioprocess, in particular in a biopharmaceutical process. The filtration module according to the invention comprises a process flow path through which a process medium is urged during a filtering process step of the bioprocess, a filter membrane coupled to the process flow path for performing the filtering process step of the bioprocess, and a sampling membrane coupled both to the process flow path and to a sampling flow path for extracting a sample from the process medium during the filtering process step of the bioprocess. The sampling flow path guides the extracted sample to a sampling outlet of the filtration module or to an analyzer integrated into the filtration module.

Regarding the overall design, the filtration module according to the invention can be configured as a cartridge, a cassette, a capsule, a membrane adsorber or the like. Such modules are usually prefabricated or preassembled units which already include necessary connectors (e.g. tri-clamp or hose barb) for connection to input and output lines.

In the filtration module according to the invention, the process flow path is the main path of the process medium in the module, whereas the sampling flow path is an additional path provided for the sample extracted from the process medium. Both membranes, i.e. the filter membrane and the sampling membrane are coupled to the process flow path. "Coupled to the process flow path" and "coupled to the sampling flow path" means that the membranes are in direct fluid communication with the process flow path and the process flow path, respectively.

While the filter membrane is used for the actual filtering of the process medium, the sampling membrane is used at the same time to extract a sample from the process medium, i.e. while the process medium flows through the process flow path during the filtering process (sub-)step. Since the sampling membrane is coupled to the sampling flow path, the sample passes through the sampling membrane into the sampling flow path, where it is guided either to an internal analyzer within the filtration module or to an external analyzer.

The type of membrane which is used as sampling membrane is chosen according to the analyte(s) and/or parameter(s) to be analyzed. If a specific analyte is to be extracted, especially the molecular weight cut-off (MWCO) of the sampling membrane is chosen accordingly. Using a sampling membrane adapted to the specific analyte is especially advantageous because other components of the process medium are held back and thus cannot disturb the analysis. In particular, sampling with such a specific membrane does not result in a loss of the target protein, which remains in the process flow path.

Possible analytes are, for example, antibodies, therapeutic protein, host cell protein (HCP), DNA, salt concentration, protein A etc.

The sampling membrane can be a dialysis membrane, i.e. a semi-permeable film (usually a sheet of regenerated cellulose) containing a plurality of pores of predefined size. It is thus possible to separate molecules in solution by the difference in their rates of diffusion through the semi-permeable membrane. The shape of the sampling membrane can be adapted as expedient, e.g. flat, curved, cylindrical etc.

Depending on the characteristics of the sampling membrane (pore size etc.), it may be necessary or at least expedient to transport the sample to the analyzer with a transportation medium (typically a buffer) which is urged through the sampling flow path.

With the filtration module according to the invention it is possible to automatically extract multiple samples or to provide quasi-continuous sampling during the process without the risk of contamination. The samples can be analyzed automatically in real-time. Thus, the results of the analysis can be immediately used to adjust or control the running process via a process control unit connected to the analyzer.

Preferably, the sampling membrane forms at least a portion of a boundary between the process medium and the sampling flow path. This allows a direct transfer into the sampling flow path without any obstacles.

A major advantage of the invention is that the filtration process does not have to be interrupted when samples are taken. Moreover, during sampling even a pressure loss in the process flow path can largely be avoided since only selected molecules are extracted from the process medium, especially in an embodiment with a sampling membrane having a pore size (MWCO) which is significantly smaller than the pore size of the filter membrane used for the actual filtration step performed in the filtration module.

However, the sampling membrane can also be a regular filter membrane. Compared to the filter membrane used for the actual filtration step, the sampling membrane can still have other characteristics. Nevertheless it will allow enough of the process medium components to pass through into the sampling flow path so that in this case a transport medium is not absolutely necessary.

In order to extract different analytes from the process medium it is expedient to provide at least one further sampling membrane which is coupled both to the process flow path and to the sampling flow path, the sampling membranes having different characteristics, especially different pore sizes.

According to a first aspect of the above approach, the individual sampling membranes are coupled to different sampling channels of the sampling flow path. This means that the sampling flow path includes separate channels where different analytes are transported. The advantage of this design is that the different analytes are prevented from being mixed with each other.

According to a second aspect, which may be combined with the first aspect mentioned before, the individual sampling membranes are coupled to different process channels of the process flow path. This means that the process flow path is divided into separate channels, and the different samples are taken from the different process channels.

According to a specific embodiment of the invention, the sampling membrane can be a hollow fiber arranged as a channel in the process flow path.

It is also possible to use a capture membrane as sampling membrane. With a capture membrane an analyte can be enriched before it is transported to the analyzer.

The sampling membrane can also be a hydrophilic membrane or a hydrophobic membrane (depending on the analyte). In this case, hydrophilic or hydrophobic characteristics of the analyte can be used to separate it from the process medium.

The analyzer can be provided inside the filtration module. If the filtration module is designed as a single-use module, this means that the analyzer is at least partly made of single-use components. It is to be noted that further components may be needed for a full analysis which are provided outside the filtration module. Such outside components, which are usually reusable components, are not regarded as components of the "integrated" analyzer here.

Depending on the analyte and/or the parameter(s) of the process medium sample to be analyzed, the integrated analyzer can be based on at least one of the following techniques: liquid chromatography (LC); liquid chromatography-mass spectrometry (LC-MS); high-performance liquid chromatography (HPLC); ultra-high-performance liquid chromatography (UHPLC); gas chromatography (GC); gas chromatography-mass spectrometry (GC-MS); matrix-assisted laser desorption/ ionization combined with time-of-flight mass spectrometry (MALDI-TOF); enzymatic analysis; spectroscopic analysis, in particular at least one of the following: Raman spectroscopy, near-infrared spectroscopy (NIR), mid-infrared spectroscopy (MIR), ultraviolet-visible spectroscopy (UV-Vis), fluorescence spectroscopy; osmometry; pH measurement; conductivity measurement; optical measurement, in particular refractometry; surface plasmon resonance (SPR); nuclear magnetic resonance spectroscopy (NMR).

The invention also provides a filtration assembly for filtering a process medium in a bioprocess, in particular in a biopharmaceutical process. The filtration assembly according to the invention comprises a filtration device as defined above and an analyzer coupled to the sampling outlet of the filtration module. This means that the analyzer is provided as an external apparatus. Since it is not integrated into the (single-use) filtration module, the external analyzer can be a more complex, reusable apparatus.

The external analyzer is based on at least one of the following techniques: liquid chromatography (LC); liquid chromatography-mass spectrometry (LC-MS); high-performance liquid chromatography (HPLC); ultra-high-performance liquid chromatography (UHPLC); gas chromatography (GC); gas chromatography-mass spectrometry (GC-MS); matrix-assisted laser desorption/ionization combined with time-of-flight mass spectrometry (MALDI-TOF); enzymatic analysis; spectroscopic analysis, in particular at least one of the following: Raman spectroscopy, near-infrared spectroscopy (NIR), mid-infrared spectroscopy (MIR), ultraviolet-visible spectroscopy (UV-Vis), fluorescence spectroscopy; osmometry; pH measurement; conductivity measurement; optical measurement, in particular refractometry; surface plasmon resonance (SPR); nuclear magnetic resonance spectroscopy (NMR).

If a transport medium, in particular a buffer or a solvent, is used to receive the samples extracted from the process medium by the sampling membrane or to wash out an analyte from the sampling membrane, the filtration assembly preferably comprises means for urging the transport medium through the sampling flow path, e.g. a pump. It is most effective to use the sampling membrane in countercurrent mode, i.e. the process medium and the transport medium flow in opposite directions along opposite sides of the sampling membrane.

The filtration assembly may also comprise a process control unit which is configured to receive data from the analyzer and to adjust or to control process components of the bioprocess based on the results of the analysis. Such process components could be components used in the actual filtration step or other components used in other steps of the bioprocess.

The invention further provides a method of sampling during a bioprocess, in particular during a biopharmaceutical process. The sampling method according to the invention comprises the following steps: providing a filtration module as defined above; urging a process medium through the process flow path; filtering the process medium by using the filter membrane coupled to the process flow path; extracting a sample from the process medium during the filtering by using the sampling membrane coupled to both the process flow path and the sampling flow path; and guiding the extracted sample to a sampling outlet of the filtration module or to an analyzer integrated into the filtration module.

In order to receive and transport the samples extracted from the process medium a transport medium should be urged through the sampling flow path towards the analyzer.

As explained before, countercurrent flow operation of the process medium and the transport medium is most effective, i.e. it is preferred that the process medium and the transport medium flow in opposite directions along opposite sides of the sampling membrane.

According to a first alternative, the transport medium is continuously urged through the sampling flow path so that a quasi-continuous sample analysis is possible.

According to a second alternative, the transport medium is urged through the sampling flow path in a stopped-flow manner so that different samples can be analyzed separately.

In order to enable an immediate influence on the running bioprocess, the sampling method further comprises the following steps: analyzing the sample by the analyzer; and adjusting or controlling the bioprocess based on the results of the analysis. Corresponding adjustment or control actions may affect the current filtration step or any other step of the bioprocess.

Further, the invention provides a computer program comprising instructions to effect at least one of the following: cause the means for urging the transport medium through the sampling flow path of the filtration assembly to control the flow of the transport medium; control the analyzer of the filtration module or the analyzer of the filtration assembly, especially providing settings and inputs to the analyzer; cause a process control unit of the filtration assembly to evaluate analysis data provided by the analyzer of the filtration module or the analyzer of the filtration assembly, and to adjust or control the bioprocess based on the evaluation.

Further features and advantages of the invention will become apparent from the following description and from the accompanying drawings to which reference is made. In the drawings:
- Figure 1 schematically shows a sampling technique using two different sampling membranes arranged sequentially;
- Figure 2a shows a perspective view of a first embodiment of a filtration module according to the invention;
- Figure 2b shows a view of a first side of the filtration module according to Figure 2a;
- Figure 2c shows a section view of the filtration module according to Figure 2b along sectional plane A-A;
- Figure 2d shows a view of a second side of the filtration module according to Figure 2a;
- Figure 2e shows a section view of the filtration module according to Figure 2d along sectional plane B-B;
- Figure 2f shows an enlarged view of detail X according to Figure 2e;
- Figure 2g shows a section view of the filtration module according to Figure 2d along sectional plane C-C;
- Figure 3a shows a perspective view of a second embodiment of a filtration module according to the invention;
- Figure 3b shows a view of a first side of the filtration module according to Figure 3a;
- Figure 3c shows a section view of the filtration module according to Figure 3b along sectional plane A-A;
- Figure 3d shows an enlarged view of detail X according to Figure 3c;
- Figure 3e shows a view of a second side of the filtration module according to Figure 3a;
- Figure 3f shows a section view of the filtration module according to Figure 3e along sectional plane B-B
- Figure 4 schematically shows a multi-channel sampling flow path with two different sampling membranes; and
- Figure 5 schematically shows a sampling technique using two different sampling membranes in a cascade arrangement.

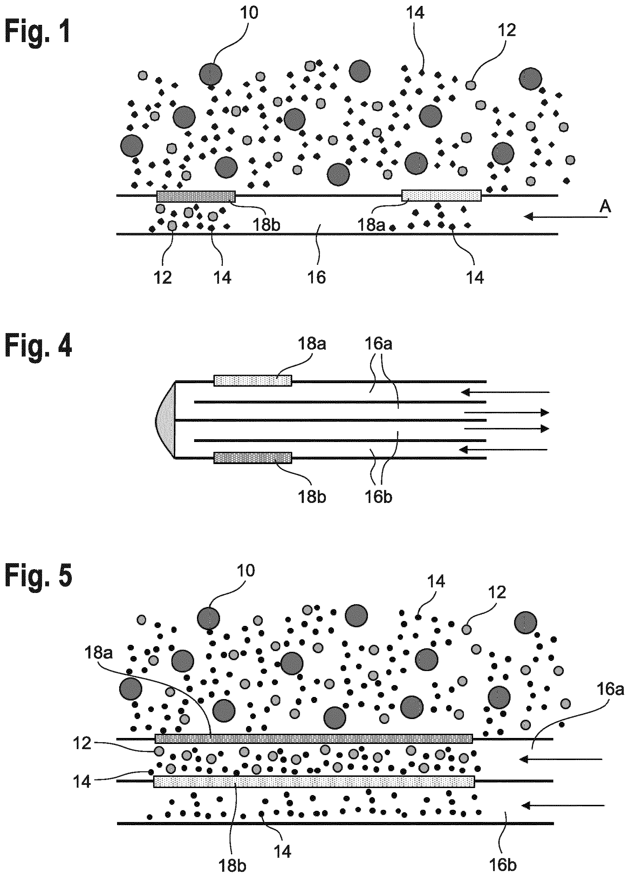

Figure 1 schematically illustrates how samples can be taken from a process medium in a filtration module. The upper half of Figure 1 shows a process medium containing several components. By way of example, three different components of the process medium are represented by different symbols. In this example, large circles represent a plurality of cells 10, medium-sized circles represent a plurality of proteins and/or antibodies 12, and small dots represent a plurality of smaller molecules 14, e.g. glucose and/or lactate molecules.

A sampling flow path 16 is in direct contact with the process medium. With respect to a flow direction indicated by arrow A, two different sampling membranes 18a, 18b are sequentially arranged in the sampling flow path 16. In particular, each of the sampling membranes 18a, 18b forms a portion of the boundary between the process medium and the sampling flow path 16.

In the example shown, the first sampling membrane 18a has a smaller pore size (more specifically: a lower molecular weight cut-off (MWCO)) than the second sampling membrane 18b. Therefore, only the smaller molecules 14 can pass through the second membrane into the sampling flow path 16. A first diffusion time can be set, during which a transport medium, typically a buffer or a solvent, is not urged through the sampling flow path 16 in the transport direction A, but halted, to provide sufficient time for the smaller molecules to travel across the first sampling membrane 18a into the sampling flow path 16. The transport medium can then be urged a little further, e.g. up to the second sampling membrane 18b.

The second sampling membrane 18b has a larger cut-off pore size than the first sampling membrane 18a. Therefore, the medium sized components of the medium can diffuse through the second sampling membrane 18b, especially the proteins and/or antibodies 12. A second diffusion time can be set, during which the transport medium is halted to allow the medium sized molecules to enter into the sampling flow path 16. The transport medium can then be urged further to transport the sample with the molecules collected from the process medium to an analyzer.

The transport medium can be urged through the sampling flow path 16 by a drive, e.g. a pump, or by gravity. Halting of the transport medium can be effected by stopping the external drive or by other means, e.g. a valve. Alternatively, the transport medium is not halted but constantly urged through the sampling flow path 16 at constant velocity.

The sampling procedure shown schematically in Figure 1 allows samples of two different components of the process medium to be taken and analyzed. For example, the concentration of the two components in the process medium can be determined.

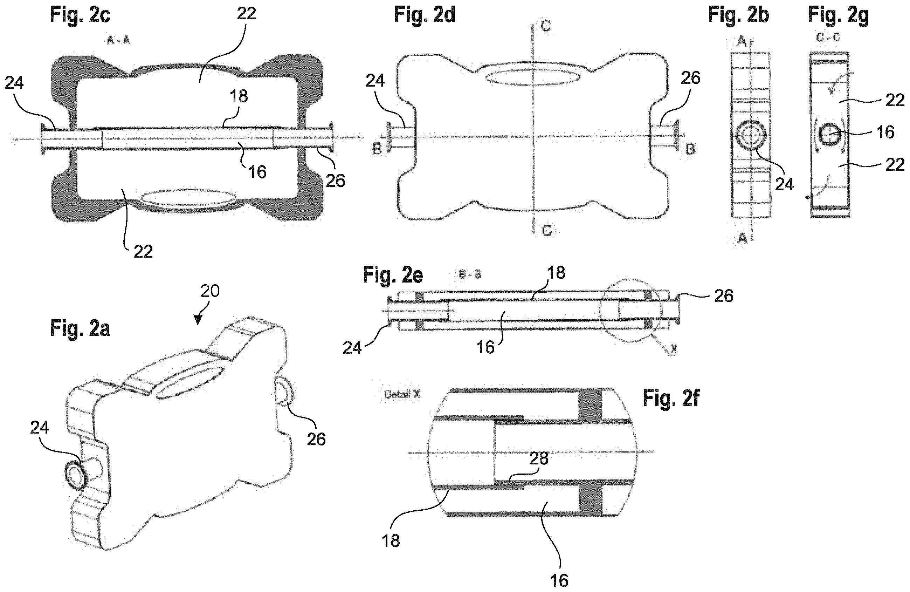

Figures 2a to 2f show a first embodiment of a filtration module 20 for filtering a process medium in a bioprocess, in particular in a biopharmaceutical process. The filtration module 20 is a prefabricated or preassembled unit designed as a cartridge, but could also be designed as a capsule or the like. The whole filtration module 20 is configured as a single-use module, i.e. it is made of materials that can be sterilized, especially by gamma radiation. Preferably, the filtration module 20 is sterilized before it is shipped as a ready-to-use module to a customer.

The filtration module 20 includes at least one process flow path. Via an inlet connector (not shown) the process medium to be filtered in the filtration module 20 is fed to one filter membrane or a stack of filter membranes 22 (not shown in detail) arranged in the process flow path. Via a corresponding output connector (not shown) the filtered process medium exits the filtration module 20. In case of a cross-flow filtration module, both the retentate and the permeate exit the filtration module 20 via separate output connectors (not shown).

In addition, the filtration module 20 includes a separate sampling flow path 16. The sampling flow path 16 is formed here as a single channel leading through the filtration module 20 and terminates into an inlet connector 24 and an outlet connector 26, respectively. A transport medium (buffer or solvent) can be urged continuously or intermittently (in a stopped-flow manner) through the sampling flow path 16.

As can be seen in Figures 2c, 2e and 2f, a portion of the sampling flow path 16 is formed by a cylindrical sampling membrane 18. The axial ends of the sampling membrane 18 are pushed on corresponding inner end portions 28 of the inlet and outlet connectors 24, 26, respectively. Thus, the sample membrane 18 forms a portion of a boundary between the process medium and the sampling flow path 16.

The actual shape and arrangement of the sampling membrane 18 may vary. In any event, the sampling membrane 18 should be coupled both to the process flow path and to the sampling flow path 16 such that selected molecules of the process medium can travel across the sampling membrane 18 into the sampling flow path 16 and form a sample.

The transport medium in the sampling flow path 16 receives the molecules from the process medium and transports the sample to an analyzer. The analyzer is either integrated into the filtration module 20 or provided as a separate external component of a filtration assembly. In the latter case, the sample is transported via the outlet connector 26 to the external analyzer.

The integrated or external analyzer can be based on at least one of the following techniques: liquid chromatography (LC); liquid chromatography-mass spectrometry (LC-MS); high-performance liquid chromatography (HPLC); ultra-high-performance liquid chromatography (UHPLC); gas chromatography (GC); gas chromatography-mass spectrometry (GC-MS); matrix-assisted laser desorption/ionization combined with time-of-flight mass spectrometry (MALDI-TOF); enzymatic analysis; spectroscopic analysis, in particular at least one of the following: Raman spectroscopy, near-infrared spectroscopy (NIR), mid-infrared spectroscopy (MIR), ultraviolet-visible spectroscopy (UV-Vis), fluorescence spectroscopy; osmometry; pH measurement; conductivity measurement; optical measurement, in particular refractometry; surface plasmon resonance (SPR); nuclear magnetic resonance spectroscopy (NMR).

It is generally possible to take samples in the above-described manner from the feed and/or from the retentate and/or from the permeate. The respective sampling membrane 18 has to be coupled both to the respective flow path in the filtration module 20 (feed path, retentate path, permeate path), which is then regarded as part of the process flow path, and to the sampling flow path 16. It may be expedient to provide separate sampling flow paths 16 for each kind of sample (feed, retentate, permeate).

If different molecules are to be taken as separate samples, a corresponding number of sampling membranes 18 having different characteristics, especially with respect to pore size (MWCO), are provided.

Depending on the type of analysis, it may be possible to use a regular filter membrane as sampling membrane 18. Accordingly, the sampling membrane 18 allows a relatively large proportion of components of the process medium to permeate through the sampling membrane. In this case, a transport medium in the sampling flow path 16 is not absolutely necessary.

The connectors of the filtration module 20 are preferably tri-clamp flanges or hose barbs allowing sterile connections. Thus, the filtration module can be easily integrated into a filtration assembly used in a bioprocess. Since the complete filtration module 20 is designed as a single-use module, it can be disposed of as a whole after use and be replaced by a new filtration module 20 for the following application.

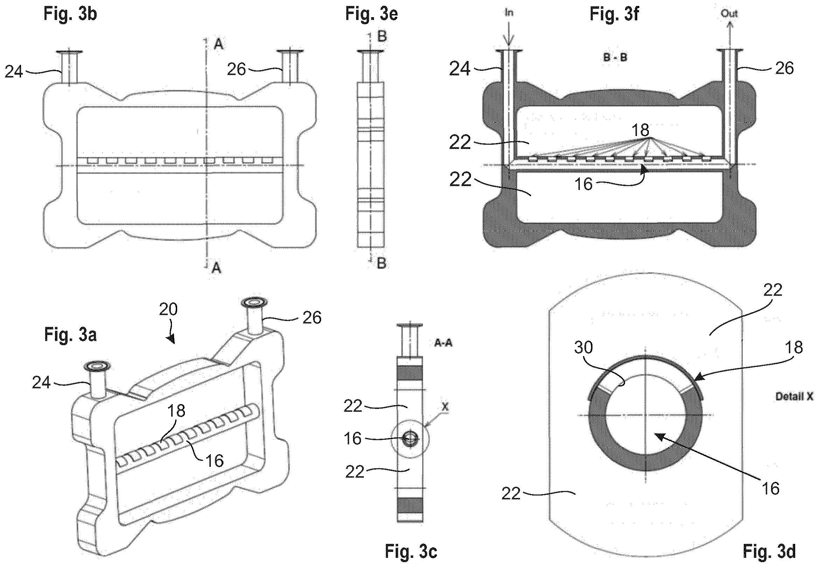

Figures 3a to 3f show a second embodiment of the filtration module 20. In the following, only the major differences compared to the first embodiment will be explained.

In the second embodiment the inlet and outlet connectors 24, 26 are arranged at another side of the filtration module 20, while the sampling flow path 16 is still in direct contact with the process medium. Here, a plurality of sampling membranes 18 are disposed along the sampling flow path 16, each sampling membrane 18 forming a portion of the boundary between the process medium and the sampling flow path 16. In particular, as can be seen in the sectional view of Figure 3d, the sampling flow path 16 is formed as a single channel with a plurality of openings 30. Each of the openings 30 is covered by a sampling membrane 18. As explained above, the sampling membranes 18 may have different characteristics, especially regarding pore size.

It is to be understood that the embodiments shown in the Figures are only used to illustrate certain features of the filtration module 20, which may be combined in any suitable manner. Moreover, the sampling membranes 18 may have other shapes, especially in case the filtration module 20 is not configured as a cartridge but as a capsule, for example.

Especially in cases where it is useful to enrich the analyte before an analysis, a capture membrane can be used as sampling membrane 18. The capture membrane is specifically configured to capture the analyte from the process medium flowing through the process flow path. To this end, the surface of the capture membrane is provided with a specific binding material adapted to the analyte. The accumulated analyte is extracted from the capture membrane by elution on the other side of the membrane, i.e. a solvent is urged through the sampling flow path 16 for washing out the analyte. The solvent is also used as transport medium for guiding the extracted sample to a sampling outlet of the filtration module 20 or to an analyzer integrated into the filtration module 20.

According to another approach, the sampling membrane 18 is a hydrophilic membrane exhibiting an affinity for water. In general, hydrophilic membranes are capable of filtering such elements as bacteria, viruses, proteins, particulates, and other contaminants. Likewise, it is possible to use a hydrophobic membrane which blocks the passage of water. The choice between a hydrophilic membrane and a hydrophobic membrane depends on the kind of the analyte.

Irrespective of the general design of the filtration module 20, the process flow path and/or the sampling flow path 16 may be composed of multiple separate channels.

Figures 4 and 5 show two schematic examples of a multi-channel sampling flow path 16 with two individual sampling flow channels 16a, 16b. Each of the sampling flow channels 16a, 16b is provided with a sampling membrane 18a, 18b, respectively. The sampling membranes 18a, 18b may have different characteristics (e.g. MWCO). A transport medium is urged through each sampling flow channel 16a, 16b individually. Thus, the different samples contained in the different sampling flow channels 16a, 16b can be taken to the same analyzer sequentially (one after the other with breaks in between) or to different analyzers (possibly simultaneously).

In the embodiment shown in Figure 4 each sampling membrane 18a, 18b is coupled both to the process flow path and to its associated sampling flow channel 16a, 16b, respectively.

In the embodiment shown in Figure 5, however, only the first sampling membrane 18a of the first sampling flow channel 16a is coupled to the process flow path, i.e. the second sampling membrane 18b is not coupled to the process flow path. Instead, the second sampling membrane 18b coupled both to the first sampling flow channel 16a and to the second sampling flow channel 16b.

It is especially expedient if the first sampling membrane 18a has a larger MWCO (pore size) than the second sampling membrane 18b as shown in Figure 5. With such a cascade arrangement of sampling membranes 18a, 18b it is possible to provide MWCO dependent transport of analytes to the same analyzer or to different analyzers.

Of course, the cascade arrangement of sampling membranes can be further extended with additional sampling flow channels and sampling membranes interconnecting the individual sampling flow channels.

A computer program executable on a general-purpose computer can be used to perform or assist performance of any of the method steps described above. In particular, the computer can be configured as a program control unit of the filtration assembly which is adapted to adjust or to control process components of the bioprocess.

### List of Reference Signs

- 10: cells
- 12: proteins and/ or antibodies
- 14: smaller molecules
- 16: sampling flow path
- 16a: first sampling flow channel
- 16b: second sampling flow channel
- 18a: first sampling membrane
- 18b: second sampling membrane
- 18: sampling membrane(s)
- 20: filtration module
- 22: filter membranes
- 24: inlet connector
- 26: outlet connector
- 28: end portions
- 30: openings

## Claims

1. A filtration module (20) for filtering a process medium in a bioprocess, in particular in a biopharmaceutical process, the filtration module (20) comprising
a process flow path through which a process medium is urged during a filtering process step of the bioprocess,
a filter membrane (20) coupled to the process flow path for performing the filtering process step of the bioprocess, **characterised in that** the filtration module comprises
a sampling membrane (18) coupled both to the process flow path and to a sampling flow path (16) for extracting a sample from the process medium during the filtering process step,
the sampling flow path (16) guiding the extracted sample to a sampling outlet of the filtration module (20) or to an analyzer integrated into the filtration module (20).

2. The filtration module (20) according to claim 1, **characterized in that** the sampling membrane (18) forms at least a portion of a boundary between the process medium and the sampling flow path (16).

3. The filtration module (20) according to claim 1 or 2, **characterized in that** the sampling membrane (18) has a pore size which is smaller than the pore size of the filter membrane (20).

4. The filtration module (20) according to any of the preceding claims, **characterized in that** at least one further sampling membrane (18) is coupled both to the process flow path and to the sampling flow path (16), the sampling membranes (18) having different characteristics, especially different pore sizes.

5. The filtration module (20) according to claim 4, **characterized in that** the individual sampling membranes (18) are coupled to different sampling channels of the sampling flow path (16).

6. The filtration module (20) according to claim 4 or 5, **characterized in that** the individual sampling membranes (18) are coupled to different process channels of the process flow path.

7. The filtration module (20) according to any of the preceding claims, **characterized in that** the sampling membrane (18) is a hollow fiber arranged as a channel in the process flow path.

8. The filtration module (20) according to any of claims 1 to 5, **characterized in that** the sampling membrane (18) is a capture membrane.

9. The filtration module (20) according to any of claims 1 to 5, **characterized in that** the sampling membrane (18) is a hydrophilic membrane or a hydrophobic membrane.

10. The filtration module (20) according to any of the preceding claims, **characterized in that** the analyzer is based on at least one of the following techniques: liquid chromatography; liquid chromatography-mass spectrometry; high-performance liquid chromatography; ultra-high-performance liquid chromatography; gas chromatography; gas chromatography-mass spectrometry; matrix-assisted laser desorption/ionization combined with time-of-flight mass spectrometry; enzymatic analysis; spectroscopic analysis, in particular at least one of the following: Raman spectroscopy, near-infrared spectroscopy, mid-infrared spectroscopy, ultraviolet-visible spectroscopy, fluorescence spectroscopy; osmometry; pH measurement; conductivity measurement; optical measurement, in particular refractometry; surface plasmon resonance; nuclear magnetic resonance spectroscopy.

11. A filtration assembly for filtering a process medium in a bioprocess, in particular in a biopharmaceutical process, the filtration assembly comprising a filtration device according to one of the preceding claims and an analyzer coupled to the sampling outlet of the filtration module (20), the analyzer being based on at least one of the following techniques: liquid chromatography; liquid chromatography-mass spectrometry; high-performance liquid chromatography; ultra-high-performance liquid chromatography; gas chromatography; gas chromatography-mass spectrometry; matrix-assisted laser desorption/ionization combined with time-of-flight mass spectrometry; enzymatic analysis; spectroscopic analysis, in particular at least one of the following: Raman spectroscopy, near-infrared spectroscopy, mid-infrared spectroscopy, ultraviolet-visible spectroscopy, fluorescence spectroscopy; osmometry; pH measurement; conductivity measurement; optical measurement, in particular refractometry; surface plasmon resonance; nuclear magnetic resonance spectroscopy..

12. The filtration assembly according to claim 11, **characterized by** means for urging a transport medium through the sampling flow path (16).

13. The filtration assembly according to claim 11 or 12, **characterized by** a process control unit configured to receive data from the analyzer and to adjust or to control process components of the bioprocess.

14. A method of sampling during a bioprocess, in particular during a biopharmaceutical process, the method comprising the following steps:
- providing a filtration module (20) according to any of claims 1 to 10;
- urging a process medium through the process flow path;
- filtering the process medium by using the filter membrane (20) coupled to the process flow path;
- extracting a sample from the process medium during the filtering by using the sampling membrane (18) coupled to both the process flow path and the sampling flow path (16); and
- guiding the extracted sample to a sampling outlet of the filtration module (20) or to an analyzer integrated into the filtration module (20).

15. A computer program comprising instructions to effect at least one of the following:
- cause the means for urging the transport medium through the sampling flow path (16) of the filtration assembly according to claim 12 to control the flow of the transport medium:
- control the analyzer of the filtration module (20) according to any of claims 1 to 10 or the analyzer of the filtration assembly according to any of claims 11 to 13, especially to provide settings and inputs to the analyzer;
- cause a process control unit of the filtration assembly according to any of claims 11 to 13 to evaluate analysis data provided by the analyzer of the filtration module (20) according to any of claims 1 to 10 or the analyzer of the filtration assembly according to any of claims 11 to 13, and to adjust or control the bioprocess based on the evaluation.

16. Use of a filtration module (20) according to any of claims 1-10 in a filtering process step of a bioprocess, in particular of a biopharmaceutical process.

## Patentansprüche

1. Filtrationsmodul (20) zum Filtern eines Prozessmediums in einem Bioprozess, insbesondere in einem biopharmazeutischen Prozess, wobei das Filtrationsmodul (20) Folgendes umfasst
einen Prozessflusspfad, durch den während eines Filtrationsprozessschritts des Bioprozesses ein Prozessmedium gedrängt wird,
eine Filtermembran (20), die zum Durchführen des Filtrationsprozessschritts des Bioprozesses an den Prozessflusspfad gekoppelt ist, **dadurch gekennzeichnet, dass** das Filtrationsmodul Folgendes umfasst
eine Probenahmemembran (18) zum Extrahieren einer Probe während des Filtrationsprozessschritts aus dem Prozessmedium, die sowohl an den Prozessflusspfad als auch an einen Probenahmeflusspfad (16) gekoppelt ist,
wobei der Probenahmeflusspfad (16) die extrahierte Probe zu einem Probenahmeauslass des Filtrationsmoduls (20) oder zu einem in das Filtrationsmodul (20) integrierten Analysator führt.

2. Filtrationsmodul (20) nach Anspruch 1, **dadurch gekennzeichnet, dass** die Probenahmemembran (18) mindestens einen Abschnitt einer Grenze zwischen dem Prozessmedium und dem Probenahmeflusspfad (16) bildet.

3. Filtrationsmodul (20) nach Anspruch 1 oder 2, **dadurch gekennzeichnet, dass** die Probenahmemembran (18) eine Porengröße aufweist, die kleiner ist als die Porengröße der Filtermembran (20) .

4. Filtrationsmodul (20) nach einem der vorhergehenden Ansprüche, **dadurch gekennzeichnet, dass** mindestens eine weitere Probenahmemembran (18) sowohl an den Prozessflusspfad als auch an den Probenahmeflusspfad (16) gekoppelt ist, wobei die Probenahmemembranen (18) verschiedene Charakteristika aufweisen, insbesondere verschiedene Porengrößen.

5. Filtrationsmodul (20) nach Anspruch 4, **dadurch gekennzeichnet, dass** die einzelnen Probenahmemembranen (18) an verschiedene Probenahmekanäle des Probenahmeflusspfads (16) gekoppelt sind.

6. Filtrationsmodul (20) nach Anspruch 4 oder 5, **dadurch gekennzeichnet, dass** die einzelnen Probenahmemembranen (18) an verschiedene Prozesskanäle des Prozessflusspfads gekoppelt sind.

7. Filtrationsmodul (20) nach einem der vorhergehenden Ansprüche, **dadurch gekennzeichnet, dass** die Probenahmemembran (18) eine hohle Faser ist, die als ein Kanal im Prozessflusspfad angeordnet ist.

8. Filtrationsmodul (20) nach einem der Ansprüche 1 bis 5, **dadurch gekennzeichnet, dass** die Probenahmemembran (18) eine Erfassungsmembran ist.

9. Filtrationsmodul (20) nach einem der Ansprüche 1 bis 5, **dadurch gekennzeichnet, dass** die Probenahmemembran (18) eine hydrophile Membran oder eine hydrophobe Membran ist.

10. Filtrationsmodul (20) nach einem der vorhergehenden Ansprüche, **dadurch gekennzeichnet, dass** der Analysator auf mindestens einer der folgenden Techniken basiert: Flüssigkeitschromatographie; Flüssigkeitschromatographie-Massenspektrometrie; Hochleistungsflüssigkeitschromatographie; Ultrahochleistungsflüssigkeitschromatographie; Gaschromatographie; Gaschromatographie-Massenspektrometrie; matrixgestützte Laserdesorption/-ionisation kombiniert mit einer Flugzeitmassenspektrometrie; enzymatische Analyse; spektroskopische Analyse, insbesondere eines von Folgendem: Raman-Spektroskopie, Nahinfrarotspektroskopie, Mittelinfrarotspektroskopie, Ultraviolett-Sichtbar-Spektroskopie, Fluoreszenzspektroskopie; Osmometrie; pH-Messung; Leitfähigkeitsmessung; optische Messung, insbesondere Refraktometrie; Oberflächenplasmonenresonanz; nuklearmagnetische Resonanzspektroskopie.

11. Filtrationsanordnung zum Filtern eines Prozessmediums in einem Bioprozess, insbesondere einem biopharmazeutischen Prozess, wobei die Filtrationsanordnung eine Filtrationsvorrichtung nach einem der vorhergehenden Ansprüche und einen Analysator, der an den Probenahmeauslass des Filtrationsmoduls (20) gekoppelt ist, umfasst, wobei der Analysator auf mindestens einer der folgenden Techniken basiert: Flüssigkeitschromatographie; Flüssigkeitschromatographie-Massenspektrometrie; Hochleistungsflüssigkeitschromatographie; Ultrahochleistungsflüssigkeitschromatographie; Gaschromatographie; Gaschromatographie-Massenspektrometrie; matrixgestützte Laserdesorption/-ionisation kombiniert mit einer Flugzeitmassenspektrometrie; enzymatische Analyse; spektroskopische Analyse, insbesondere eines von Folgendem: Raman-Spektroskopie, Nahinfrarotspektroskopie, Mittelinfrarotspektroskopie, Ultraviolett-Sichtbar-Spektroskopie, Fluoreszenzspektroskopie; Osmometrie; pH-Messung; Leitfähigkeitsmessung; optische Messung, insbesondere Refraktometrie; Oberflächenplasmonenresonanz; nuklearmagnetische Resonanzspektroskopie.

12. Filtrationsanordnung nach Anspruch 11, **gekennzeichnet durch** Mittel zum Drängen eines Transportmediums durch den Probenahmeflusspfad (16).

13. Filtrationsanordnung nach Anspruch 11 oder 12, **gekennzeichnet durch** eine Prozesssteuereinheit, die dazu ausgelegt ist, Daten vom Analysator zu empfangen und Prozesskomponenten des Bioprozesses anzupassen oder zu steuern.

14. Verfahren zur Probenahme während eines Bioprozesses, insbesondere während eines biopharmazeutischen Prozesses, wobei das Verfahren die folgenden Schritte umfasst:
- Bereitstellen eines Filtrationsmoduls (20) nach einem der Ansprüche 1 bis 10;
- Drängen eines Prozessmediums durch den Prozessflusspfad;
- Filtern des Prozessmediums unter Verwendung der Filtermembran (20), die an den Prozessflusspfad gekoppelt ist;
- Extrahieren einer Probe aus dem Prozessmedium während des Filterns unter Verwendung der Probenahmemembran (18), die sowohl an den Prozessflusspfad als auch den Probenahmeflusspfad (16) gekoppelt ist; und
- Führen der extrahierten Probe zu einem Probenahmeauslass des Filtrationsmoduls (20) oder zu einem in das Filtrationsmodul (20) integrierten Analysator.

15. Computerprogramm, das Anweisungen zum Bewirken von mindestens einem von Folgendem umfasst:
- Veranlassen der Mittel zum Drängen des Transportmediums durch den Probenahmeflusspfad (16) der Filtrationsanordnung nach Anspruch 12, um den Fluss des Transportmediums zu steuern:
- Steuern des Analysators des Filtrationsmoduls (20) nach einem der Ansprüche 1 bis 10 oder des Analysators der Filtrationsanordnung nach einem der Ansprüche 11 bis 13, insbesondere um Einstellungen und Eingaben in den Analysator bereitzustellen;
- Veranlassen einer Prozesssteuereinheit der Filtrationsanordnung nach einem der Ansprüche 11 bis 13, vom Analysator des Filtrationsmoduls (20) nach einem der Ansprüche 1 bis 10 oder vom Analysator der Filtrationsanordnung nach einem der Ansprüche 11 bis 13 bereitgestellte Analysedaten auszuwerten und den Bioprozess auf Basis der Auswertung anzupassen oder zu steuern.

16. Verwenden eines Filtrationsmoduls (20) nach einem der Ansprüche 1-10 in einem Filtrationsprozessschritt eines Bioprozesses, insbesondere eines biopharmazeutischen Prozesses.

## Revendications

1. Module de filtration (20) permettant de filtrer un milieu de traitement dans un bioprocédé, en particulier dans un procédé biopharmaceutique, le module de filtration (20) comprenant
un trajet d'écoulement de traitement à travers lequel un milieu de traitement est poussé au cours d'une étape de traitement de filtrage du bioprocédé,
une membrane filtrante (20) couplée au trajet d'écoulement de traitement pour réaliser l'étape de traitement de filtrage du bioprocédé, **caractérisé en ce que** le module de filtration comprend
une membrane d'échantillonnage (18) couplée à chacun du trajet d'écoulement de traitement et d'un trajet d'écoulement d'échantillonnage (16) pour extraire un échantillon du milieu de traitement au cours de l'étape de traitement de filtrage,
le trajet d'écoulement d'échantillonnage (16) guidant l'échantillon extrait vers une sortie d'échantillonnage du module de filtration (20) ou vers un analyseur intégré au module de filtration (20).

2. Module de filtration (20) selon la revendication 1, **caractérisé en ce que** la membrane d'échantillonnage (18) forme au moins une partie d'une frontière entre le milieu de traitement et le trajet d'écoulement d'échantillonnage (16).

3. Module de filtration (20) selon la revendication 1 ou 2, **caractérisé en ce que** la membrane d'échantillonnage (18) a une taille de pores qui est plus petite que la taille de pores de la membrane filtrante (20).

4. Module de filtration (20) selon l'une des revendications précédentes, **caractérisé en ce qu'**au moins une membrane d'échantillonnage (18) supplémentaire est couplée à chacun du trajet d'écoulement de traitement et du trajet d'écoulement d'échantillonnage (16), les membranes d'échantillonnage (18) ayant des caractéristiques différentes, en particulier des tailles de pores différentes.

5. Module de filtration (20) selon la revendication 4, **caractérisé en ce que** les membranes d'échantillonnage (18) individuelles sont couplées à différents canaux d'échantillonnage du trajet d'écoulement d'échantillonnage (16).

6. Module de filtration (20) selon la revendication 4 ou 5, **caractérisé en ce que** les membranes d'échantillonnage (18) individuelles sont couplées à différents canaux de traitement du trajet d'écoulement de traitement.

7. Module de filtration (20) selon l'une des revendications précédentes, **caractérisé en ce que** la membrane d'échantillonnage (18) est une fibre creuse agencée en canal dans le trajet d'écoulement de traitement.

8. Module de filtration (20) selon l'une des revendications 1 à 5, **caractérisé en ce que** la membrane d'échantillonnage (18) est une membrane de capture.

9. Module de filtration (20) selon l'une des revendications 1 à 5, **caractérisé en ce que** la membrane d'échantillonnage (18) est une membrane hydrophile ou une membrane hydrophobe.

10. Module de filtration (20) selon l'une des revendications précédentes, **caractérisé en ce que** l'analyseur est basé au moins sur l'une des techniques suivantes : chromatographie liquide ; chromatographie liquide-spectrométrie de masse ; chromatographie liquide à haute performance ; chromatographie liquide à ultra-haute performance ; chromatographie gazeuse ; chromatographie gazeuse-spectrométrie de masse ; désorption/ionisation laser assistée par matrice combinée à la spectrométrie de masse à temps de vol ; analyse enzymatique ; analyse spectroscopique, en particulier au moins l'un des éléments suivants : spectroscopie Raman, spectroscopie dans le proche infrarouge, spectroscopie dans l'infrarouge moyen, spectroscopie dans l'ultraviolet-visible, spectroscopie de fluorescence ; osmométrie ; mesure du pH ; mesure de la conductivité ; mesure optique, en particulier réfractométrie ; résonance plasmonique de surface ; spectroscopie de résonance magnétique nucléaire.

11. Ensemble de filtration pour filtrer un milieu de traitement dans un bioprocédé, en particulier dans un procédé biopharmaceutique, l'ensemble de filtration comprenant un dispositif de filtration selon l'une des revendications précédentes et un analyseur couplé à la sortie d'échantillonnage du module de filtration (20), l'analyseur étant basé au moins sur l'une des techniques suivantes : chromatographie liquide ; chromatographie liquide-spectrométrie de masse ; chromatographie liquide à haute performance ; chromatographie liquide à ultra-haute performance ; chromatographie gazeuse ; chromatographie gazeuse-spectrométrie de masse ; désorption/ionisation laser assistée par matrice combinée à la spectrométrie de masse à temps de vol ; analyse enzymatique ; analyse spectroscopique, en particulier au moins l'un des éléments suivants : spectroscopie Raman, spectroscopie dans le proche infrarouge, spectroscopie dans l'infrarouge moyen, spectroscopie dans l'ultraviolet-visible, spectroscopie de fluorescence ; osmométrie ; mesure du pH ; mesure de la conductivité ; mesure optique, en particulier réfractométrie ; résonance plasmonique de surface ; spectroscopie de résonance magnétique nucléaire.

12. Ensemble de filtration selon la revendication 11, **caractérisé par** des moyens pour pousser un milieu de transport à travers le trajet d'écoulement d'échantillonnage (16).

13. Ensemble de filtration selon la revendication 11 ou 12, **caractérisé par** une unité de commande de traitement configurée pour recevoir des données de l'analyseur et pour ajuster ou commander les composants de traitement du bioprocédé.

14. Méthode d'échantillonnage au cours d'un bioprocédé, en particulier au cours d'un procédé biopharmaceutique, la méthode comprenant les étapes suivantes :
- fournir un module de filtration (20) selon l'une des revendications 1 à 10 ;
- pousser un milieu de traitement à travers le trajet d'écoulement de traitement ;
- filtrer le milieu de traitement à l'aide de la membrane filtrante (20) couplée au trajet d'écoulement de traitement ;
- extraire un échantillon du milieu de traitement pendant le filtrage à l'aide de la membrane d'échantillonnage (18) couplée à chacun du trajet d'écoulement de traitement et du trajet d'écoulement d'échantillonnage (16) ; et
- guider l'échantillon extrait vers une sortie d'échantillonnage du module de filtration (20) ou vers un analyseur intégré au module de filtration (20).

15. Programme informatique comprenant des instructions pour effectuer au moins l'une des actions suivantes :
- amener les moyens pour pousser le milieu de transport à travers le trajet d'écoulement d'échantillonnage (16) de l'ensemble de filtration selon la revendication 12 à commander l'écoulement du milieu de transport :
- commander l'analyseur du module de filtration (20) selon l'une des revendications 1 à 10 ou l'analyseur de l'ensemble de filtration selon l'une des revendications 11 à 13, notamment pour fournir des réglages et des entrées à l'analyseur ;
- amener une unité de commande de traitement de l'ensemble de filtration selon l'une des revendications 11 à 13 à évaluer des données d'analyse fournies par l'analyseur du module de filtration (20) selon l'une des revendications 1 à 10 ou l'analyseur de l'ensemble de filtration selon l'une des revendications 11 à 13, et à ajuster ou à commander le bioprocédé sur la base de l'évaluation.

16. Utilisation d'un module de filtration (20) selon l'une des revendications 1 à 10 dans une étape de traitement de filtration d'un bioprocédé, en particulier d'un procédé biopharmaceutique.
